# EUROPEAN PATENT APPLICATION

(11) **EP 4 832 159 A1**
(43) Date of publication of application: **28.10.2026**
(21) Application number: 24914992.3
(22) Date of filing: 07.11.2024
(51) Int. Cl.: H01M 10/613

(54) **THERMAL MANAGEMENT COMPONENT, BATTERY, AND ELECTRIC DEVICE**

(30) Priority: 02.01.2024 CN 202410008408
(71) Applicant: Contemporary Amperex Technology Co., Limited, Ningde, Fujian 352100 (CN)
(72) Inventor: HUANG, Xiaoteng, Ningde, Fujian 352100 (CN); SONG, Feiting, Ningde, Fujian 352100 (CN)
(74) Representative: Ziebig Hengelhaupt Intellectual Property Attorneys Patentanwaltskanzlei PartGmbB
(86) International application number: PCT/CN2024/130612
(87) International publication number: WO 2025/145776

(57) **Abstract**

The present application discloses a thermal management component, a battery, and an electric device. The thermal management component comprises a heat exchange tube and a first current collector; the heat exchange tube has a first end; a first flow channel used for accommodating a heat exchange medium is formed in the first current collector; the first flow channel has a first inner surface and a second inner surface which are oppositely arranged in a first direction; the first end is inserted into the first flow channel, and the first end is attached to at least one of the first inner surface and the second inner surface. Therefore, the size of the thermal management component in the first direction can be optimized, thereby reducing the space occupied by the thermal management component in the first direction, improving the energy density of a battery using the thermal management component.

## Description

### CROSS-REFERENCE TO RELATED APPLICATIONS

The present application claims priority to Chinese Patent Application No. 202410008408.7, filed on January 02, 2024 and entitled "Thermal Management Component, Battery, and Electric Device", which is incorporated herein by reference in its entirety.

### TECHNICAL FIELD

The present application relates to the battery field, and in particular, to a thermal management component, a battery, and an electric device.

### BACKGROUND

With the development of new energy technologies, batteries are more widely used. Batteries feature high energy density, high reliability, a long service life, and environmental friendliness for social environments, and have been widely used in aspects such as passenger vehicles, commercial vehicles, electric bicycles, heavy trucks, energy storage facilities, battery swapping stations, engineering manufacturing, and intelligent instruments, and further promote the technical development and research in aspects such as communication terminals, medical instruments, and energy development.

A thermal management component is one of core components of the battery, and is usually used to adjust a problem of a battery cell. However, arrangement of the thermal management component occupies the internal space of the battery, thereby reducing the energy density of the battery. How to reduce the space occupied by the thermal management component to improve the energy density of the battery is a problem to be urgently resolved in battery technologies.

### SUMMARY

Embodiments of the present application provide a thermal management component, a battery, and an electric device, so as to effectively optimize the size of the thermal management component, and improve the energy density of a battery using the thermal management component.

According to a first aspect, an embodiment of the present application provides a thermal management component, wherein the thermal management component comprises a heat exchange tube and a first current collector, and the heat exchange tube has a first end; a first flow channel used for accommodating a heat exchange medium is formed in the first current collector, and the first flow channel has a first inner surface and a second inner surface which are oppositely arranged in a first direction; and the first end is inserted into the first flow channel, and the first end is attached to at least one of the first inner surface and the second inner surface.

In the above-described technical solution, the first end is attached to at least one of the first inner surface and the second inner surface. This structure can reduce a size requirement of the first current collector in the first direction, optimize the size of the thermal management component in the first direction, reduce the space occupied by the thermal management component in the first direction, and improve the energy density of the battery using the thermal management component.

In some embodiments, the heat exchange tube is a flat tube, the first end has a first outer surface and a second outer surface which are oppositely arranged in the first direction, the first direction is parallel to the thickness direction of the heat exchange tube, the first inner surface is attached to the first outer surface, and/or the second inner surface is attached to the second outer surface.

In the above-described technical solution, the heat exchange tube is a flat tube, and the first direction is parallel to the thickness direction of the heat exchange tube, thereby optimizing the size of the heat exchange tube in the first direction, and reducing the space occupied by the heat exchange tube in the first direction.

In some embodiments, the first current collector comprises a first plate body and a second plate body that are stacked in the first direction, a first groove is formed on a side, facing the second plate body, of the first plate body, the second plate body covers the first groove to form the first flow channel, the first inner surface is a bottom wall of the first groove, and the second inner surface is a surface, forming the first flow channel, of the second plate body.

In the above-described technical solution, the first current collector comprises the first plate body and the second plate body that are stacked in the first direction, thereby reducing the difficulty in manufacturing the first flow channel and the difficulty in manufacturing the first current collector.

In some embodiments, the second plate body is a flat plate.

In the above-described technical solution, the second plate body is a flat plate, thereby reducing the difficulty in manufacturing the second plate body, and further reducing the difficulty in manufacturing the first current collector.

In some embodiments, the heat exchange tube further comprises a body, the first end is disposed at one end of the body, the body has a third outer surface in the first direction, the second plate body has a fourth outer surface facing away from the first plate body, and the third outer surface is coplanar with the fourth outer surface.

In the above-described technical solution, the third outer surface is coplanar with the fourth outer surface, thereby improving the consistency between interfaces of the thermal management component.

In some embodiments, the cross-sectional area of the first end is smaller than the cross-sectional area of the body, and a step is formed between an outer peripheral surface of the first end and an outer peripheral surface of the body.

In the above-described technical solution, a step is formed between the outer peripheral surface of the first end and the outer peripheral surface of the body, so that the size of the body is greater than the size of the first end in the first direction, and the third outer surface is coplanar with the fourth outer surface, thereby improving the consistency between the interfaces of the thermal management component.

In some embodiments, the heat exchange tube further comprises a first bending portion, and the first end is connected to the body through the first bending portion.

In the above-described technical solution, the first end is connected to the body through the first bending portion so that the third outer surface is coplanar with the fourth outer surface, thereby making the structure simple, and reducing the difficulty in manufacturing the heat exchange tube.

In some embodiments, a first sealing portion is formed between the first end and the first current collector, and the first sealing portion is disposed around the outer peripheral surface of the first end.

In the above-described technical solution, the first sealing portion is formed between the first end and the first current collector, and the first sealing portion can reduce the possibility of leakage of the heat exchange medium between the first end and the first current collector, thereby improving the reliability of the thermal management component.

In some embodiments, the first end is welded to the first current collector to form a first welding portion, and the first welding portion is the first sealing portion.

In the above-described technical solution, the first end is welded to the first current collector to form the first welding portion, and the first welding portion can improve the stability of the connection between the first end and the first current collector, and the sealing performance between the first end and the first current collector, and reduce a risk of leakage of the heat exchange medium, thereby improving the structural strength and reliability of the thermal management component.

In some embodiments, the heat exchange tube has a second end opposite to the first end, and the thermal management component further comprises a second current collector, wherein a second flow channel is formed in the second current collector, and the second flow channel has a third inner surface and a fourth inner surface which are oppositely arranged in the first direction; and the second end is inserted into the second flow channel, and the second end is attached to at least one of the third inner surface and the fourth inner surface.

In the above-described technical solution, the second end is attached to at least one of the third inner surface and the fourth inner surface, and this structure can reduce a size requirement of the second current collector in the first direction, further optimize the size of the thermal management component in the first direction, reduce the space occupied by the thermal management component in the first direction, and improve the energy density of the battery using the thermal management component.

In some embodiments, the second current collector comprises a third plate body and a fourth plate body that are stacked in the first direction, a second groove is formed on a side, facing the fourth plate body, of the third plate body, the fourth plate body covers the second groove to form the second flow channel, the third inner surface is a bottom wall of the second groove, and the fourth inner surface is a surface, forming the second flow channel, of the fourth plate body.

In the above-described technical solution, the second current collector comprises the third plate body and the fourth plate body that are stacked in the first direction, thereby reducing the difficulty in manufacturing the second flow channel and the difficulty in manufacturing the second current collector.

In some embodiments, a plurality of heat exchange tubes are disposed, the plurality of heat exchange tubes are arranged at intervals in a second direction, each of the heat exchange tubes extends in a third direction, and any two of the first direction, the second direction, and the third direction are perpendicular to each other.

In the above-described technical solution, the plurality of heat exchange tubes are disposed, thereby helping improve the heat exchange efficiency of the thermal management component.

In some embodiments, *S* heat exchange tubes are disposed, and a 1st heat exchange tube to an *S*th heat exchange tube are sequentially arranged from one side to the other side of the second direction; an *N*th heat exchange tube is in communication with an (*N*+1)th heat exchange tube through the second flow channel, and an *M*th heat exchange tube is in communication with an (*M*+1)th heat exchange tube through the first flow channel; and *N* is an odd number, *M* is an even number, *S* ≥ *N* + 1, and *S* ≥ *M* + 1.

In the above-described technical solution, when the size in the second direction is constant, the *N*th heat exchange tube is in communication with the (*N*+1)th heat exchange tube through the second flow channel, and the *M*th heat exchange tube is in communication with the (*M*+1)th heat exchange tube through the first flow channel, thereby facilitating the arrangement of the heat exchange tubes, increasing the number of heat exchange tubes to be arranged, and improving the heat exchange efficiency of the thermal management component.

In some embodiments, the 1st heat exchange tube is in communication with the *S*th heat exchange tube through the first flow channel.

In the above-described technical solution, the 1st heat exchange tube is in communication with the *S*th heat exchange tube through the first flow channel, so that a heat exchange path is more flexibly arranged, thereby reducing the difficulty in arranging the heat exchange path.

In some embodiments, at least one of the first current collector and the second current collector is provided with a medium inlet/outlet, and the medium inlet/outlet is in communication with the first flow channel or the second flow channel.

In the above-described technical solution, the medium inlet/outlet is provided, so as to help input the heat exchange medium into the thermal management component or lead out the heat exchange medium from the thermal management component, thereby facilitating the circulation of the heat exchange medium, and improving the heat exchange efficiency of the thermal management component.

In some embodiments, the length of the first end is *L*, which satisfies 2 mm ≤ *L* ≤ 20 mm.

In the above-described technical solution, the length of the first end is between 2 mm and 20 mm, which optimizes the depth of the heat exchange tube inserted into the first flow channel, so that the first current collector and the heat exchange tube have a good insertion depth, the stability of the connection between the first current collector and the heat exchange tube is high, and the first end uses less materials, thereby helping control costs.

In some embodiments, 3 mm ≤ *L* ≤ 15 mm.

In the above-described technical solution, the length of the first end is between 3 mm and 15 mm, which further optimizes the depth of the heat exchange tube inserted into the first flow channel, so that the thermal management component has high structural strength and low costs.

According to a second aspect, an embodiment of the present application provides a battery, wherein the battery comprises the battery cell provided in any one of the embodiments of the first aspect.

According to a third aspect, an embodiment of the present application provides an electric device, wherein the electric device comprises the battery provided in the embodiment of the second aspect, and the battery is configured to supply power to the electric device.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded schematic diagram of a battery according to some embodiments of the present application;
FIG. 3 is an exploded schematic diagram of a battery cell according to some embodiments of the present application;
FIG. 4 is a schematic diagram of a structure of a thermal management component according to some embodiments of the present application;
FIG. 5 is a cross-sectional view of FIG. 4 along A-A according to some embodiments of the present application;
FIG. 6 is an exploded schematic diagram of a thermal management component according to some embodiments of the present application;
FIG. 7 is a schematic diagram of an internal structure of a thermal management component according to some embodiments of the present application;
FIG. 8 is a schematic diagram of assembly between a heat exchange tube and a first current collector according to some embodiments of the present application;
FIG. 9 is a schematic diagram of assembly between a heat exchange tube and a first current collector according to some other embodiments of the present application;
FIG. 10 is a partial cross-sectional view of FIG. 4 along C-C according to some embodiments of the present application;
FIG. 11 is a partial cross-sectional view of FIG. 4 along A-A according to some embodiments of the present application;
FIG. 12 is a partial cross-sectional view of FIG. 4 along A-A according to some other embodiments of the present application; and
FIG. 13 is an exploded schematic diagram of a battery according to some other embodiments of the present application.

Reference number: 30 - thermal management component; 31 - heat exchange tube; 311 - body; 3111 - third outer surface; 312 - first end; 3121 - first outer surface; 3122 - second outer surface; 3123 - step; 3124 - accommodation groove; 313 - second end; 314 - first bending portion; 32 - first current collector; 321 - first plate body; 3211 - first groove; 3212 - third groove; 322 - second plate body; 3221 - fourth outer surface; 323 - first flow channel; 3231 - first inner surface; 3232 - second inner surface; 33 - second current collector; 331 - third plate body; 3311 - second groove; 332 - fourth plate body; 333 - second flow channel; 3331 - third inner surface; 3332 - fourth inner surface; 34 - first sealing portion; 341 - sealing ring; 342 - first welding portion; 35 - first medium inlet/outlet; 36 - second medium inlet/outlet; 10 - battery cell; 11 - end cover; 12 - electrode assembly; 13 - housing; 20 - box; 21 - first portion; 22 - second portion; 23 - accommodation space; 1000 - vehicle; 100 - battery; 200 - motor; 300 - controller; Z - first direction; X - second direction; and Y - third direction.

The accompanying drawings are not drawn to actual scale.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the description of the present application, it should be noted that, unless otherwise specified, "a plurality of" means two or more. Orientations or positional relationships indicated by the terms "upper", "lower", "left", "right", "inner", "outer", and the like are merely for convenience of description of the present application and simplicity of description, and do not indicate or imply that an apparatus or an element to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance. "Perpendicular" is not perpendicular in the strict sense, but is within an allowable range of error. "Parallel" is not parallel in the strict sense, but is within an allowable range of error.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, the term "or" is only an associative relationship for describing associated objects, indicating that two relationships may be present. For example, A or B may indicate the following two cases: presence of only A and presence of only B.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include but is not limited to a lithium-ion secondary battery, a lithium-ion primary battery, a lithium-sulfur battery, a sodium-lithium ion battery, a sodium-ion battery, a magnesium-ion battery, or the like. The battery cell includes but is not limited to the shape of a cylinder, a flat body, a cuboid, or the like. The battery cell generally includes a cylindrical battery cell, a square battery cell, a pouch battery cell, and the like based on a packaging manner.

The battery cell includes an electrode assembly and an electrolyte solution. The electrode assembly is composed of a positive electrode plate, a negative electrode plate and a separator. Working of the battery cell mainly relies on migration of metal ions between the positive electrode plate and the negative electrode plate. The metal ions (for example, lithium ions) are intercalated or de-intercalated between the positive electrode and negative electrode back and forth. The separator is disposed between the positive electrode and the negative electrode to prevent the positive electrode plate and the negative electrode plate from being short-circuited and to allow active ions to pass therethrough.

The positive electrode plate includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is used as a positive electrode tab.

A lithium-ion battery is used as an example. A positive electrode active material may be lithium cobalt oxide, lithium iron phosphate, ternary lithium, lithium manganate oxide, or the like. The positive electrode current collector may be a metal foil or a composite current collector. For example, aluminum or stainless steel which is subjected to surface treatment by silver, stainless steel, copper, aluminum, nickel, a carbon electrode, carbon, nickel, titanium, or the like can be used as the metal foil. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

The negative electrode plate includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer, and the negative electrode current collector not coated with the negative electrode active material layer is used as a negative electrode tab.

The negative electrode current collector may be a metal foil or a composite current collector. For example, aluminum or stainless steel which is subjected to surface treatment by silver, stainless steel, copper, aluminum, nickel, a carbon electrode, carbon, nickel, titanium, or the like can be used as the metal foil. The negative electrode active material may be carbon, silicon, or the like.

To reduce a risk that a large current passes through the tab and fusing occurs, a plurality of positive electrode tabs are stacked together, and a plurality of negative electrode tabs are stacked together. The separator may be made of PP (polypropylene, polypropylene), PE (polyethylene, polyethylene), or the like. In addition, the electrode assembly may be of a winding structure or may be of a laminated structure.

A battery mentioned in the embodiments of the present application refers to a single physical module including one or a plurality of battery cells to provide a higher voltage and capacity. For example, the battery mentioned in the present application may include a battery module, a battery pack, or the like. The battery generally includes a case for encapsulating one or more battery cells. The box can reduce impact of liquids or other foreign objects on the charging or discharging of the battery cells.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, a plurality of battery cells (cell) may be first integrated into at least one battery module (module), and then the battery module is mounted in the box to form a battery pack (pack). In these embodiments, an auxiliary structural member such as a cross beam may be further disposed between battery modules to improve the mounting stability of the battery modules in the box.

In some embodiments, the box body may be a part of a chassis structure of a vehicle. For example, a part of the box body may be at least a part of a floor of a vehicle, or a part of the box body may be at least a part of a cross beam and a side beam of a vehicle.

In some embodiments, the battery may be an energy storage device. The energy storage device includes an energy storage container, an energy storage cabinet, and the like.

When a temperature of the battery cell is excessively low, a movement speed of metal ions in the battery cell is low, a capability of the metal ions to be intercalated into the electrode plate is also low, and a charging/discharging capability is low. However, when the temperature of the battery cell is excessively high, thermal runaway easily occurs, which causes risks such as bulge and explosion. Therefore, a proper temperature design is one of the keys to make the battery have good charging/discharging capability and reliability.

Therefore, the battery generally further includes a thermal management component. The thermal management component is configured to accommodate fluid to adjust temperatures of a plurality of battery cells, so that the battery is in a proper temperature range, and has good charging/discharging capability and high reliability. Herein, the fluid may be liquid or gas, and adjusting the temperature means heating or cooling the plurality of battery cells. The fluid may be referred to as a heat exchange medium. When cooling or reducing the temperature of the battery cell, the thermal management component is configured to accommodate the cooling fluid to reduce the temperatures of the plurality of battery cells. In this case, the thermal management component may also be referred to as a cooling component, a cooling system, a cooling plate, or the like. The fluid accommodated by the thermal management component may also be referred to as a cooling medium or a cooling fluid, or more specifically, may be referred to as cooling liquid or cooling gas. In addition, the thermal management component may alternatively be configured to perform heating to increase the temperatures of the plurality of battery cells, which is not limited in the embodiments of the present application. Optionally, the fluid may flow in a circulating manner, to achieve a better temperature adjustment effect. Optionally, the fluid may be water, a mixture of water and ethylene glycol, air, or the like.

In the related technologies, the thermal management component includes a harmonica tube and current collecting tubes disposed at both ends of the harmonica tube. To facilitate the mounting of the harmonica tube in the current collecting tube, the current collecting tube is usually provided with a mounting hole and a corresponding structural feature, such as a snap-fit structure. The arrangement of the structural feature increases a thickness requirement of the current collecting tube, increases the size of the current collecting tube, and expands the space occupied by the current collecting tube, thereby reducing the proportion of the battery cell in a unit volume, and reducing the energy density of the battery.

In view of this, to resolve a problem that the thermal management component reduces the energy density of the battery, the present application provides a technical solution. In the solution, the thermal management component includes a heat exchange tube and a first current collector, a first flow channel used for accommodating a heat exchange medium is formed in the first current collector, and the first flow channel has a first inner surface and a second inner surface which are oppositely arranged in a first direction. The first end is inserted into the first flow channel, and the first end is attached to at least one of the first inner surface and the second inner surface. In such a thermal management component, the first end is attached to at least one of the first inner surface and the second inner surface, thereby reducing a size requirement of the first current collector in the first direction, reducing the size of the thermal management component in the first direction, reducing the space occupied by the thermal management component in the first direction, and improving the energy density of the battery using the thermal management component.

The technical solution disclosed in the embodiments of the present application is applicable, without limitation, to batteries and electric devices using the batteries.

The electric device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

To facilitate description, in the following embodiments, a vehicle 1000 is used as an example of the electric device.

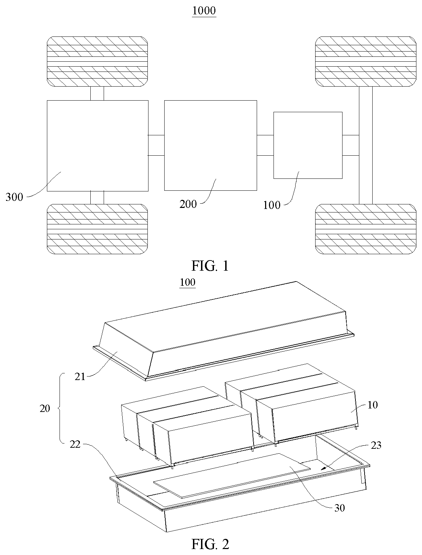

Referring to FIG. 1, FIG. 1 is a schematic diagram of a structure of a vehicle 1000 according to some embodiments of the present application. A battery 100 is disposed inside the vehicle 1000, and the battery 100 may be disposed at the bottom, head, or tail of the vehicle 1000. The battery 100 may be configured to power the vehicle 1000, for example, the battery 100 may be used as an operating power source of the vehicle 1000.

The vehicle 1000 may further include a controller 300 and a motor 200, where the controller 300 is configured to control the battery 100 to power the motor 200, for example, for a working power requirement of the vehicle 1000 during starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

In some embodiments, referring to FIG. 2, FIG. 2 is an exploded schematic diagram of a battery 100 according to some embodiments of the present application. The battery 100 includes a plurality of battery cells 10 and a thermal management component 30. The plurality of battery cells 10 may be connected in series, in parallel, or in series-parallel. The series-parallel connection means that the plurality of battery cells 10 are connected both in series and in parallel. The thermal management component 30 is configured to adjust the temperature of the battery cell 10.

In some embodiments, the battery 100 may further include a busbar component (not shown in the figure). The plurality of battery cells 10 may be electrically connected through the busbar component to achieve series connection, parallel connection, or series-parallel connection of the plurality of battery cells 10.

The busbar component may be a metal conductor, such as copper, iron, aluminum, steel, or aluminum alloy.

In some embodiments, the battery 100 may further include a box 20, and the box 20 is configured to accommodate the battery cell 10. The box 20 may include a first portion 21 and a second portion 22, and the first portion 21 and the second portion 22 fit to each other to define an accommodation space 23 for accommodating the battery cell 10. Certainly, a joint between the first portion 21 and the second portion 22 may be sealed by a sealing element (not shown in the figure), which may be a sealing ring, a sealant, or the like.

The first portion 21 and the second portion 22 may have various shapes, for example, a cuboid and a cylinder. The first portion 21 may have a hollow structure with one open side, the second portion 22 may also have a hollow structure with one open side, and the open side of the second portion 22 fits to the open side of the first portion 21 to form the box 20 having an accommodation space 23. Certainly, alternatively, the first portion 21 may have a hollow structure with one open side, the second portion 22 may have a plate-like structure, and the second portion 22 may fit to the open side of the first portion 21 to form the box 20 having an accommodation space 23.

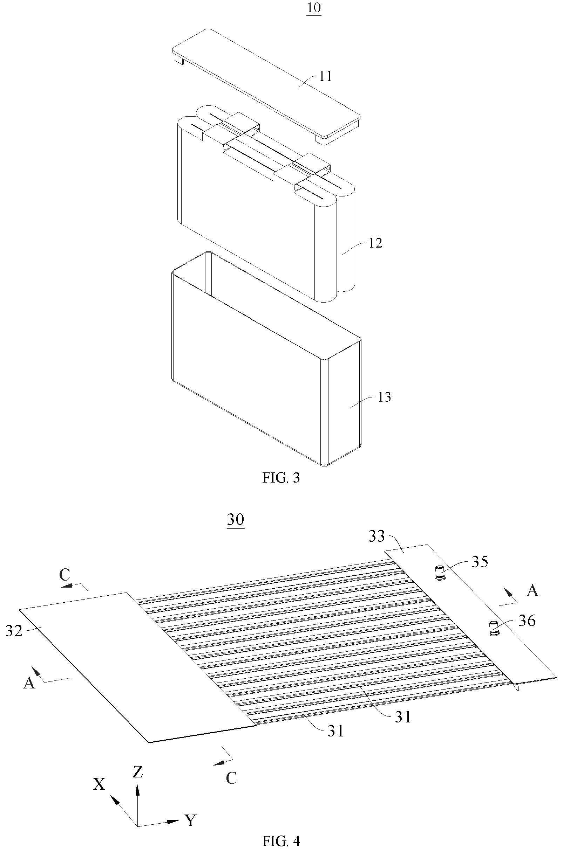

Referring to FIG. 3, FIG. 3 is an exploded schematic diagram of a battery cell 10 according to some embodiments of the present application. The battery cell 10 may include a housing 13, an electrode assembly 12, an end cover 11, and another functional component.

The housing 13 is a component used for accommodating the electrode assembly 12, and the housing 13 may be of a hollow structure in which an opening is formed at one end, or the housing 13 may be of a hollow structure in which openings are formed at both ends. The housing 13 may be made of various materials, for example, copper, iron, aluminum, steel, and an aluminum alloy. The housing 13 may have various shapes such as a cylinder and a cuboid. For example, in FIG. 3, the housing 13 has the shape of a cuboid.

The end cover 11 is a component that fits to the opening of the housing 13 to isolate the internal environment of the battery cell 10 from the external environment. The end cover 11 fits to the opening of the housing 13. The end cover 11 and the housing 13 jointly define a sealed space used for accommodating the electrode assembly 12, an electrolytic solution, and another functional component. The end cover 11 may have a shape adapted to the shape of the housing 13. For example, the end cover 11 is of a rectangular plate-like structure adapted to the housing 13 when the housing 13 is of a cuboid structure. For another example, the end cover 11 is of a circular plate-like structure adapted to the housing 13 when the housing 13 is of a cylinder structure. The end cover 11 may also be made of various materials. For example, the end cover 11 may be made of metal materials, such as copper, iron, aluminum, steel, and an aluminum alloy. The material of the end cover 11 may be the same as or different from the material of the housing 13.

In the battery cell 10, one or two end covers 11 may be provided. If the housing 13 is of a hollow structure in which an opening is formed at one end, one end cover 11 is provided correspondingly. If the housing 13 is of a hollow structure in which openings are formed at both ends, two end covers 11 are provided correspondingly, and the two end covers 11 respectively fit to the two openings of the housing 13.

An embodiment of the present application provides a thermal management component 30, so as to reduce a size requirement of the thermal management component 30, reduce space occupation, and improve the energy density of a battery 100 using the thermal management component 30. A specific structure of the thermal management component 30 is described in detail below with reference to the accompanying drawings.

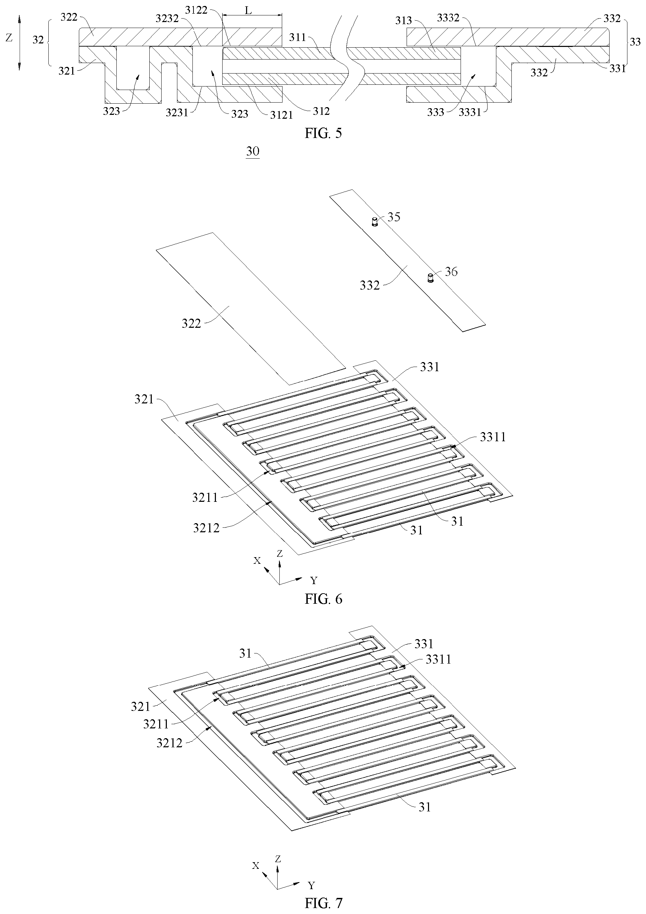

Referring to FIG. 4 and FIG. 5, FIG. 4 is a schematic diagram of a structure of a thermal management component 30 according to some embodiments of the present application; and FIG. 5 is a cross-sectional view of FIG. 4 along A-A according to some embodiments of the present application.

Referring to FIG. 4 and FIG. 5, an embodiment of the present application provides a thermal management component 30. The thermal management component 30 comprises a heat exchange tube 31 and a first current collector 32, and the heat exchange tube 31 has a first end 312. A first flow channel 323 used for accommodating a heat exchange medium is formed in the first current collector 32. The first flow channel 323 has a first inner surface 3231 and a second inner surface 3232 which are oppositely arranged in a first direction Z. The first end 312 is inserted into the first flow channel 323, and the first end 312 is attached to at least one of the first inner surface 3231 and the second inner surface 3232.

The heat exchange tube 31 is of a hollow tubular structure, and the heat exchange tube 31 is a component having a flow channel inside to accommodate a heat medium and capable of exchanging heat with another component. For example, the heat exchange tube 31 may be in contact with the battery cell 10 in the battery 100 to exchange heat, so as to adjust the temperature of the battery cell 10.

The cross section of the heat exchange tube 31 may be rectangular, square, elliptical, irregularly-shaped, or the like, provided that the heat exchange tube 31 can be in contact with and exchange heat with another component. There may be one or a plurality of heat exchange tubes 31, and the plurality of heat exchange tubes 31 can improve the heat exchange efficiency.

The first end 312 is a structure of the heat exchange tube 31 for insertion into the first current collector 32, the first end 312 is an end of the heat exchange tube 31 in an extension direction, and a portion of the heat exchange tube 31 inserted into the first flow channel 323 is the first end 312. The heat exchange tube 31 may extend in a straight line, or the heat exchange tube 31 may extend in a curved line or a broken line.

The first current collector 32 is a component for collecting the heat exchange medium in the heat exchange tube 31. Understandably, the first flow channel 323 can be in communication with the flow channel in the heat exchange tube 31, and the heat exchange medium can circulate between the heat exchange tube 31 and the first current collector 32.

The first current collector 32 may be constructed to be rectangular, circular, elliptical, irregularly-shaped, or the like, provided that the first flow channel 323 can be formed in the first current collector 32 to accommodate the heat exchange medium. Optionally, the first current collector 32 is constructed to be a rectangular plate.

The first flow channel 323 has a first inner surface 3231 and a second inner surface 3232 which are oppositely arranged in the first direction Z. Understandably, the first inner surface 3231 and the second inner surface 3232 are formed in the first current collector 32, and the first flow channel 323 may be defined by a plurality of inner surfaces. In this case, the first inner surface 3231 and the second inner surface 3232 are a part of the inner surfaces defining the first flow channel 323.

The first end 312 is inserted into the first flow channel 323, so that the heat exchange tube 31 is connected to the first current collector 32, and the flow channel inside the heat exchange tube 31 is in communication with the first flow channel 323.

The first end 312 being attached to at least one of the first inner surface 3231 and the second inner surface 3232 means that the first end 312 may be attached to the first inner surface 3231, the first end 312 may be attached to the first inner surface 3231, or the first end 312 may be attached to both the first inner surface 3231 and the second inner surface 3232 (as shown in FIG. 5). The attachment means that the first end 312 is in surface contact with the first inner surface 3231 and/or the second inner surface 3232.

When the size of the first end 312 is constant, the first end 312 is attached to the first inner surface 3231, and a distance between the first end 312 and the first inner surface 3231 is reduced, thereby reducing the size requirement of the first current collector 32 in the first direction Z. When the size of the first end 312 is constant, the first end 312 is attached to the second inner surface 3232, and a distance between the first end 312 and the second inner surface 3232 is reduced, thereby reducing the size requirement of the first current collector 32 in the first direction Z.

In this embodiment, the thermal management component 30 includes a heat exchange tube 31 and a first current collector 32. The heat exchange tube 31 has a first end 312, and a first flow channel 323 used for accommodating a heat exchange medium is formed in the first current collector 32. The first flow channel 323 has a first inner surface 3231 and a second inner surface 3232 which are oppositely arranged in a first direction Z. The first end 312 is inserted into the first flow channel 323, and the first end 312 is attached to at least one of the first inner surface 3231 and the second inner surface 3232. This structure can reduce the size requirement of the first current collector 32 in the first direction Z, optimize the size of the thermal management component 30 in the first direction Z, reduce the space occupied by the thermal management component 30 in the first direction Z, and improve the energy density of the battery 100 using the thermal management component 30.

In some embodiments, the first current collector 32 may not only collect the heat exchange medium, but also exchange heat with another component like the heat exchange tube 31, so as to improve the heat exchange efficiency of the thermal management component 30.

In some embodiments, the heat exchange tube 31 is a flat tube, the first end 312 has a first outer surface 3121 and a second outer surface 3122 which are oppositely arranged in the first direction Z, the first direction Z is parallel to the thickness direction of the heat exchange tube 31, the first inner surface 3231 is attached to the first outer surface 3121, and/or the second inner surface 3232 is attached to the second outer surface 3122.

Understandably, the heat exchange tube 31 is a flat structure with a rectangular cross section.

The heat exchange tube 31 is a flat tube, and the first direction Z is parallel to the thickness direction of the heat exchange tube 31, thereby optimizing the size of the heat exchange tube 31 in the first direction Z, and reducing the space occupied by the heat exchange tube 31 in the first direction Z.

FIG. 6 is an exploded schematic diagram of a thermal management component 30 according to some embodiments of the present application. FIG. 7 is a schematic diagram of an internal structure of a thermal management component 30 according to some embodiments of the present application.

First referring to FIG. 6 and FIG. 7, and then in combination with FIG. 4, in some embodiments, the first current collector 32 comprises a first plate body 321 and a second plate body 322 that are stacked in the first direction Z, a first groove 3211 is formed on a side, facing the second plate body 322, of the first plate body 321, the second plate body 322 covers the first groove 3211 to form the first flow channel 323, the first inner surface 3231 is a bottom wall of the first groove 3211, and the second inner surface 3232 is a surface, forming the first flow channel 323, of the second plate body 322.

Understandably, the first current collector 32 is formed by stacking the first plate body 321 and the second plate body 322, and the first plate body 321 and the second plate body 322 jointly define the first flow channel 323.

The first plate body 321 and the second plate body 322 may be connected through bonding, welding, or the like.

The first groove 3211 may be constructed to be a rectangular groove, a U-shaped groove, or the like.

The first groove 3211 may be formed through stamping, or the first groove 3211 may be formed through cutting. Optionally, the first groove 3211 is formed through stamping, so that the molding efficiency is high and the utilization of the first plate body 321 is high.

The second inner surface 3232 is a surface, forming the first flow channel 323, of the second plate body 322. Understandably, a side, facing the first plate body 321, of the second plate body 322 is a large surface, and a part of the large surface that is used to cover the opening of the first groove 3211 to define the first flow channel 323 is the second inner surface 3232 defined in this embodiment of the present application.

In this embodiment, the first current collector 32 comprises a first plate body 321 and a second plate body 322 that are stacked in the first direction Z, the first plate body 321 is provided with a first groove 3211, and the orientation and position of the first groove 3211 may be arranged as required, so that the arrangement of the first flow channel 323 is more flexible, thereby reducing the difficulty in adjusting a flow path of the heat exchange medium, reducing the difficulty in manufacturing the first flow channel 323, and reducing the difficulty in manufacturing the first current collector 32.

In some other embodiments, the first current collector 32 may not include the first plate body 321 and the second plate body 322. For example, the first current collector 32 is formed through extrusion, and the first current collector 32 is of an integrally formed structure.

Referring to FIG. 6, in some embodiments, the second plate body 322 is a flat plate.

The second plate body 322 is a flat plate, thereby reducing the difficulty in manufacturing the second plate body 322, and further reducing the difficulty in manufacturing the first current collector 32.

In some other embodiments, the second plate body 322 may not be a flat plate. For example, the first plate body 321 and the second plate body 322 are respectively provided with corresponding grooves, and the first flow channel 323 is defined by the grooves provided in the first plate body 321 and the second plate body 322.

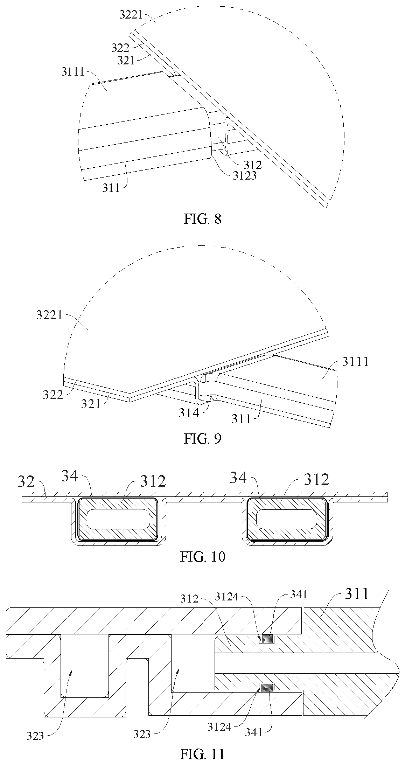

Referring to FIG. 8 and FIG. 9, FIG. 8 is a schematic diagram of assembly between a heat exchange tube 31 and a first current collector 32 according to some embodiments of the present application; and FIG. 9 is a schematic diagram of assembly between a heat exchange tube 31 and a first current collector 32 according to some other embodiments of the present application.

In some embodiments, the heat exchange tube 31 further includes a body 311, the first end 312 is disposed at one end of the body 311, the body 311 has a third outer surface 3111 in the first direction Z, the second plate body 322 has a fourth outer surface 3221 facing away from the first plate body 321, and the third outer surface 3111 is coplanar with the fourth outer surface 3221.

Understandably, the third outer surface 3111 is coplanar with the fourth outer surface 3221, and the third outer surface 3111 and the fourth outer surface 3221 are located on the same side of the thermal management component 30.

The third outer surface 3111 is coplanar with the fourth outer surface 3221, thereby improving the consistency between interfaces of the thermal management component 30.

The third outer surface 3111 is coplanar with the fourth outer surface 3221, thereby improving the consistency between interfaces of the thermal management component 30, helping increase the contact area between the thermal management component 30 and another component, and improving the heat exchange efficiency. For example, the thermal management component 30 is configured to adjust the temperature of the battery cell 10 in the battery 100, and the third outer surface 3111 is coplanar with the fourth outer surface 3221, so that both the third outer surface 3111 and the fourth outer surface 3221 can be configured to be in contact with the battery cell 10 for heat exchange, thereby increasing the contact area between the battery cell 10 and the thermal management component 30, and improving the heat exchange efficiency.

Referring to FIG. 8, in some embodiments, the cross-sectional area of the first end 312 is smaller than the cross-sectional area of the body 311, and a step 3123 is formed between an outer peripheral surface of the first end 312 and an outer peripheral surface of the body 311.

Understandably, the first end 312 is a constricted portion compared with the body 311.

The first end 312 may be integrally formed with the body 311, or the first end 312 may be connected to the body 311 through bonding, welding, or the like.

The cross-sectional area of the first end 312 is an area of a closed region surrounded by an outer contour of the cross section of the first end 312. It should be understood that the cross section of the first end 312 is a closed annular structure, and a hollow region in the middle of the cross section does not belong to the cross-sectional area of the first end 312.

A step 3123 is formed between an outer peripheral surface of the first end 312 and an outer peripheral surface of the body 311, and the step 3123 may abut against an end surface of the second plate body 322. The step 3123 may extend one circle in a circumferential direction of the body 311, or the step 3123 may extend only one segment in a circumferential direction of the body 311.

In this embodiment, a step 3123 is formed between the outer peripheral surface of the first end 312 and the outer peripheral surface of the body 311, so that the size of the body 311 is greater than the size of the first end 312 in the first direction Z, and the third outer surface 3111 is coplanar with the fourth outer surface 3221, thereby improving the consistency between the interfaces of the thermal management component 30.

Referring to FIG. 9, in some embodiments, the heat exchange tube 31 further includes a first bending portion 314, and the first end 312 is connected to the body 311 through the first bending portion 314, so that the third outer surface 3111 is coplanar with the fourth outer surface 3221, thereby improving the consistency between the interfaces of the thermal management component 30.

To be specific, one end of the first bending portion 314 is connected to the body 311, and the other end of the first bending portion is connected to the first end 312. The first bending portion 314, the first end 312, and the body 311 may be integrally formed.

For example, as shown in FIG. 9, in the first direction Z, the first end 312 and the body 311 are arranged in a staggered manner, so that the third outer surface 3111 is coplanar with the fourth outer surface 3221.

The first end 312 is connected to the body 311 through the first bending portion 314 so that the third outer surface 3111 is coplanar with the fourth outer surface 3221, thereby making the structure simple, and reducing the difficulty in manufacturing the heat exchange tube 31.

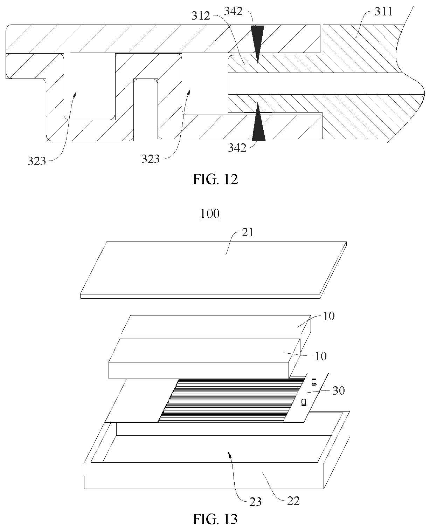

Referring to FIG. 10, FIG. 11, and FIG. 12, FIG. 10 is a partial cross-sectional view of FIG. 4 along C-C according to some embodiments of the present application; FIG. 11 is a partial cross-sectional view of FIG. 4 along A-A according to some embodiments of the present application; and FIG. 12 is a partial cross-sectional view of FIG. 4 along A-A according to some other embodiments of the present application.

Referring to FIG. 10 and FIG. 11, in some embodiments, a first sealing portion 34 is formed between the first end 312 and the first current collector 32, and the first sealing portion 34 is disposed around the outer peripheral surface of the first end 312.

The first sealing portion 34 is a structure that plays a sealing role at a gap between the outer peripheral surface of the first end 312 and the first current collector 32. There may be a gap between the outer peripheral surface of the first end 312 and the first current collector 32, and the heat exchange medium has a risk of leakage. Therefore, the first sealing portion 34 needs to be disposed between the outer peripheral surface of the first end 312 and the first current collector 32 for sealing.

The first sealing portion 34 may be a welding seam, a colloid, or a sealing ring 341. For example, as shown in FIG. 11, the outer peripheral surface of the first end 312 is provided with one circle of accommodation groove 3124. The accommodation groove 3124 is used to accommodate the sealing ring 341, a locking member (not shown in the figure) is used to lock the first end 312 to the first current collector 32, and the locking member may be a bolt.

The first sealing portion 34 is formed between the first end 312 and the first current collector 32, and the first sealing portion 34 can reduce the possibility of leakage of the heat exchange medium between the first end 312 and the first current collector 32, thereby improving the reliability of the thermal management component 30.

Referring to FIG. 12, in some embodiments, the first end 312 is welded to the first current collector 32 to form a first welding portion 342, and the first welding portion 342 is the first sealing portion 34.

Understandably, the outer peripheral surface of the first end 312 is welded to the first current collector 32. The first welding portion 342 is a welding seam formed between the first end 312 and the first current collector 32.

A manner of welding between the first end 312 and the first current collector 32 includes but is not limited to laser welding, arc welding, friction stir welding, or the like. The first current collector 32 may be welded with a full penetration joint from the outside of the first current collector 32, so that the first current collector 32 is welded to the first end 312.

The first end 312 is welded to the first current collector 32 to form the first welding portion 342, and the first welding portion 342 can improve the stability of the connection between the first end 312 and the first current collector 32, and the sealing performance between the first end 312 and the first current collector 32, and reduce a risk of leakage of the heat exchange medium, thereby improving the structural strength and reliability of the thermal management component 30.

Referring to FIG. 4 and FIG. 5, in some embodiments, the heat exchange tube 31 has a second end 313 opposite to the first end 312, and the thermal management component 30 further comprises a second current collector 33, wherein a second flow channel 333 is formed in the second current collector 33, and the second flow channel 333 has a third inner surface 3331 and a fourth inner surface 3332 which are oppositely arranged in the first direction Z. The second end 313 is inserted into the second flow channel 333, and the second end 313 is attached to at least one of the third inner surface 3331 and the fourth inner surface 3332.

Understandably, the heat exchange tube 31 has the first end 312 and the second end 313 that are opposite to each other, the second end 313 is the other end of the heat exchange tube 31 in the extension direction, and the end is configured to be inserted into the second current collector 33. The first end 312 is inserted into the first flow channel 323, and the heat exchange tube 31 is connected to the first current collector 32, so that the flow channel inside the heat exchange tube 31 is in communication with the first flow channel 323. The second end 313 is inserted into the second flow channel 333, and the heat exchange tube 31 is connected to the second current collector 33, so that the flow channel inside the heat exchange tube 31 is in communication with the second flow channel 333.

The first current collector 32 and the second current collector 33 are respectively disposed at two ends of the heat exchange tube 31. The first end 312 of the heat exchange tube 31 is inserted into the first flow channel 323, and the second end 313 of the heat exchange tube 31 is inserted into the second flow channel 333.

The second current collector 33 is also a component for collecting the heat exchange medium in the heat exchange tube 31. The second flow channel 333 can be in communication with the flow channel in the heat exchange tube 31, and the heat exchange medium can circulate between the heat exchange tube 31 and the second current collector 33.

The second current collector 33 may be constructed to be rectangular, circular, elliptical, irregularly-shaped, or the like, provided that the second flow channel 333 can be formed in the second current collector 33 to accommodate the heat exchange medium. Optionally, the second current collector 33 is constructed to be a rectangular plate.

The second flow channel 333 has a third inner surface 3331 and a fourth inner surface 3332 which are oppositely arranged in the first direction Z. Understandably, the third inner surface 3331 and the fourth inner surface 3332 are formed in the second current collector 33, and the second flow channel 333 may be defined by a plurality of inner surfaces. In this case, the third inner surface 3331 and the fourth inner surface 3332 are a part of the inner surfaces defining the second flow channel 333.

The second end 313 being attached to at least one of the third inner surface 3331 and the fourth inner surface 3332 means that the second end 313 may be attached to the third inner surface 3331, the second end 313 may be attached to the fourth inner surface 3332, or the second end 313 may be attached to both the third inner surface 3331 and the fourth inner surface 3332 (as shown in FIG. 5).

When the size of the second end 313 is constant, the second end 313 is attached to the third inner surface 3331, and a distance between the second end 313 and the third inner surface 3331 is reduced, thereby reducing the size requirement of the second current collector 33 in the first direction Z. When the size of the second end 313 is constant, the first end 312 is attached to the fourth inner surface 3332, and a distance between the second end 313 and the fourth inner surface 3332 is reduced, thereby reducing the size requirement of the second current collector 33 in the first direction Z.

In this embodiment, the thermal management component 30 further includes the second current collector 33, the second end 313 is inserted into the second flow channel 333, and the second end 313 is attached to at least one of the third inner surface 3331 and the fourth inner surface 3332. This structure can reduce the size requirement of the second current collector 33 in the first direction Z, further optimize the size of the thermal management component 30 in the first direction Z, reduce the space occupied by the thermal management component 30 in the first direction Z, and improve the energy density of the battery 100 using the thermal management component 30.

In some embodiments, the second current collector 33 may not only collect the heat exchange medium, but also exchange heat with another component like the heat exchange tube 31, so as to improve the heat exchange efficiency of the thermal management component 30.

Referring to FIG. 5 and FIG. 6, in some embodiments, the second current collector 33 includes a third plate body 331 and a fourth plate body 332 that are stacked in the first direction Z, a second groove 3311 is formed on a side, facing the fourth plate body 332, of the third plate body 331, the fourth plate body 332 covers the second groove 3311 to form the second flow channel 333, the third inner surface 3331 is a bottom wall of the second groove 3311, and the fourth inner surface 3332 is a surface, forming the second flow channel 333, of the fourth plate body 332.

Understandably, the second current collector 33 is formed by stacking the third plate body 331 and the fourth plate body 332, and the third plate body 331 and the fourth plate body 332 jointly define the second flow channel 333. The third plate body 331 and the fourth plate body 332 may be connected through bonding, welding, or the like.

The second groove 3311 may be constructed to be a rectangular groove, a U-shaped groove, or the like.

The second groove 3311 may be formed through stamping, or the second groove 3311 may be formed through cutting. Optionally, the second groove 3311 is formed through stamping, so that the molding efficiency is high and the utilization of the third sheet material is high.

The fourth inner surface 3332 is a surface, forming the second flow channel 333, of the fourth plate body 332. Understandably, a side, facing the third plate body 331, of the fourth plate body 332 is a large surface, and a part of the large surface that is used to cover the opening of the second groove 3311 to define the second flow channel 333 is the fourth inner surface 3332 defined in this embodiment of the present application.

In this embodiment, the second current collector 33 comprises the third plate body 331 and the fourth plate body 332 that are stacked in the first direction Z, thereby reducing the difficulty in manufacturing the second flow channel 333 and the difficulty in manufacturing the second current collector 33.

In some embodiments, the fourth plate body 332 is a flat plate.

Referring to FIG. 4, FIG. 6, and FIG. 7, in some embodiments, a plurality of heat exchange tubes 31 are disposed, the plurality of heat exchange tubes 31 are arranged at intervals in a second direction X, each of the heat exchange tubes 31 extends in a third direction Y, and any two of the first direction Z, the second direction X, and the third direction Y are perpendicular to each other.

The plurality of heat exchange tubes 31 are disposed, thereby helping improve the heat exchange efficiency of the thermal management component 30.

Referring to FIG. 4, in some embodiments, *S* heat exchange tubes 31 are disposed, and a 1st heat exchange tube to an *S*th heat exchange tube are sequentially arranged from one side to the other side of the second direction X. An *N*th heat exchange tube is in communication with an (*N*+1)th heat exchange tube through the second flow channel 333, and an *M*th heat exchange tube is in communication with an (*M*+1)th heat exchange tube through the first flow channel 323. *N* is an odd number, *M* is an even number, *S* ≥ *N* + 1, and *S* ≥ *M* + 1.

Herein, *S* refers to any natural number of 4 or more, and a value of *S* may be 5, 6, 7, 8, 9, 10, 11, 12, 13, 14, 15, 16, or the like. The 1st heat exchange tube and the *S*th heat exchange tube are two outermost heat exchange tubes 31 in the second direction X. The *N*th heat exchange tube and the (*N*+1)th heat exchange tube are two adjacent heat exchange tubes 31. The *M*th heat exchange tube 31 and the (*M*+1)th heat exchange tube 31 are two adjacent heat exchange tubes 31.

For example, as shown in FIG. 4 and FIG. 7, 14 heat exchange tubes 31 are disposed, and *S* is 14. The 14 heat exchange tubes 31 are sequentially arranged in the second direction X. The foremost side of the second direction X is defined by the 1st heat exchange tube, and the rearmost side of the second direction X is defined by the 14th heat exchange tube.

Specifically, the 1st heat exchange tube is in communication with the 2nd heat exchange tube through the second flow channel 333. The 3rd heat exchange tube is in communication with the 4th heat exchange tube through the second flow channel 333. The 5th heat exchange tube is in communication with the 6th heat exchange tube through the second flow channel 333. The 7th heat exchange tube is in communication with the 8th heat exchange tube through the second flow channel 333. The 9th heat exchange tube is in communication with the 10th heat exchange tube through the second flow channel 333. The 11th heat exchange tube is in communication with the 12th heat exchange tube through the second flow channel 333. The 13th heat exchange tube is in communication with the 14th heat exchange tube through the second flow channel 333.

Similarly, the 2nd heat exchange tube is in communication with the 3rd heat exchange tube through the first flow channel 323. The 4th heat exchange tube is in communication with the 5th heat exchange tube through the first flow channel 323. The 6th heat exchange tube is in communication with the 7th heat exchange tube through the first flow channel 323. The 8th heat exchange tube is in communication with the 9th heat exchange tube through the first flow channel 323. The 10th heat exchange tube is in communication with the 11th heat exchange tube through the first flow channel 323. The 12th heat exchange tube is in communication with the 13th heat exchange tube through the first flow channel 323.

In some embodiments, as shown in FIG. 7, the first plate body 321 is provided with a plurality of first grooves 3211, the third plate body 331 is provided with a plurality of second grooves 3311, the plurality of first grooves 3211 are arranged at intervals in the second direction X, the plurality of second grooves 3311 are arranged at intervals in the second direction X, and the first grooves 3211 and the second grooves 3311 are arranged in a staggered manner in the second direction X.

Every two heat exchange tubes 31 correspond to one first groove 3211, the adjacent 2nd heat exchange tube and 3rd heat exchange tube are mounted in one first groove 3211, the adjacent 4th heat exchange tube and 5th heat exchange tube are mounted in another first groove 3211, and so on.

Every two heat exchange tubes 31 correspond to one second groove 3311, the adjacent 1st heat exchange tube and 2nd heat exchange tube are mounted in one second groove 3311, the adjacent 3rd heat exchange tube and 4th heat exchange tube are mounted in another second groove 3311, and so on.

The 14 heat exchange tubes 31 are connected by using the first groove 3211 and the second groove 3311, so that the heat exchange medium can flow circuitously among the first flow channel 323, the heat exchange tubes 31, and the second flow channel 333, that is, the heat exchange medium can flow alternately between the first groove 3211 and the second groove 3311.

In the thermal management component 30 provided in this embodiment of the present application, when the size in the second direction X is constant, the *N*th heat exchange tube 31 is in communication with the (*N*+1)th heat exchange tube 31 through the second flow channel 333, and the *M*th heat exchange tube 31 is in communication with the (*M*+1)th heat exchange tube 31 through the first flow channel 323, thereby facilitating the arrangement of the heat exchange tubes 31, increasing the number of heat exchange tubes 31 to be arranged, and improving the heat exchange efficiency of the thermal management component 30.

In some embodiments, the 1st heat exchange tube is in communication with the *S*th heat exchange tube through the first flow channel 323.

Understandably, in the arrangement direction of the heat exchange tubes 31, the 1st heat exchange tube is in communication with the *S*th heat exchange tube through the first flow channel 323.

In some embodiments, as shown in FIG. 7, a third groove 3212 is further formed on a side, facing the second plate body 322, of the first plate body 321, the second plate body 322 covers an opening of the third groove 3212 and the opening of the first groove 3211 to form the first flow channel 323, and the 1st heat exchange tube and the 14th heat exchange tube are mounted in the third groove 3212, so that the 1st heat exchange tube is in communication with the 14th heat exchange tube through the first flow channel 323.

The 1st heat exchange tube is in communication with the *S*th heat exchange tube through the first flow channel 323, so that a heat exchange path is more flexibly arranged, thereby reducing the difficulty in arranging the heat exchange path.

In some embodiments, at least one of the first current collector 32 and the second current collector 33 is provided with a medium inlet/outlet, and the medium inlet/outlet is in communication with the first flow channel 323 or the second flow channel 333.

To be specific, the first current collector 32 may be provided with a medium inlet/outlet, or the second current collector 33 may be provided with a medium inlet/outlet, or both the first current collector 32 and the second current collector 33 may be provided with a medium inlet/outlet.

For example, as shown in FIG. 4 and FIG. 6, the second current collector 33 is provided with two medium inlets/outlets, which are a first medium inlet/outlet 35 and a second medium inlet/outlet 36, respectively.

The medium inlet/outlet may be an opening for the heat exchange medium to enter, or the medium inlet/outlet may be an opening for the heat exchange medium to flow out. For example, the first medium inlet/outlet 35 is an inlet, and the second medium inlet/outlet 36 is an outlet.

The medium inlet/outlet is provided, so as to help input the heat exchange medium into the thermal management component 30 or lead out the heat exchange medium from the thermal management component 30, thereby facilitating the circulation of the heat exchange medium, and improving the heat exchange efficiency of the thermal management component 30.

Referring to FIG. 5, in some embodiments, the length of the first end 312 is *L*, which satisfies 2 mm ≤ *L* ≤ 20 mm.

The length of the first end 312 refers to the size of the first end 312 in the extension direction of the heat exchange tube 31, and the length *L* of the first end 312 is the depth of the heat exchange tube 31 inserted into the first flow channel 323.

For example, the length of the first end 312 may be 2 mm, 4 mm, 6 mm, 9 mm, 10 mm, 11 mm, 14 mm, 17 mm, 18 mm, 19 mm, 20 mm, or the like. Because it is impossible to exhaustively list all content between 2 mm and 20 mm, several intermediate values are listed herein as examples, and it can be understood that any value between 2 mm and 20 mm may be used as the length *L* of the first end 312.

The length of the first end 312 is between 2 mm and 20 mm, which optimizes the depth of the heat exchange tube 31 inserted into the first flow channel 323, so that the first current collector 32 and the heat exchange tube 31 have a good insertion depth, the stability of the connection between the first current collector 32 and the heat exchange tube 31 is high, and the first end 312 uses less materials, thereby helping control costs.

In some embodiments, 3 mm ≤ *L* ≤ 15 mm.

For example, the length of the first end 312 may be 3 mm, 4 mm, 5 mm, 7 mm, 8 mm, 10 mm, 11 mm, 14 mm, 15 mm, or the like. Because it is impossible to exhaustively list all content between 3 mm and 15 mm, several intermediate values are listed herein as examples, and it can be understood that any value between 3 mm and 15 mm may be used as the length *L* of the first end 312.

The length of the first end 312 is between 3 mm and 15 mm, which further optimizes the depth of the heat exchange tube 31 inserted into the first flow channel 323, so that the thermal management component 30 has high structural strength and low costs.

In some embodiments, the length of the second end 313 is between 2 mm and 20 mm.

Referring to FIG. 13, FIG. 13 is an exploded schematic diagram of a battery 100 according to some other embodiments of the present application. An embodiment of the present application further provides a battery 100, where the battery 100 includes the above-described thermal management component 30.

Still referring to FIG. 13, the battery 100 further includes a box 20 and a battery cell 10, the box 20 includes a first portion 21 and a second portion 22, the first portion 21 is a cover plate, and the first portion 21 and the second portion 22 jointly define an accommodation space 23 for accommodating the battery cell 10. The thermal management component 30 is disposed between a wall portion of the box 20 and the battery cell 10.

An embodiment of the present application further provides an electric device, where the electric device includes the above-described battery 100, and the battery 100 is configured to supply electric energy to the electric device.

An embodiment of the present application further provides a thermal management component 30, where the thermal management component 30 includes a plurality of heat exchange tubes 31, a first current collector 32, and a second current collector 33.

The plurality of heat exchange tubes 31 are arranged at intervals in a second direction X, each of the heat exchange tubes 31 extends in a third direction Y, and the heat exchange tube 31 is a flat tube. In an extension direction of the heat exchange tube 31, the heat exchange tube 31 has a first end 312 and a second end 313 that are opposite to each other.

The first current collector 32 includes a first plate body 321 and a second plate body 322 that are stacked in a first direction Z. A first groove 3211 and a third groove 3212 are formed on a side, facing the second plate body 322, of the first plate body 321. A plurality of first grooves 3211 are provided, and the plurality of first grooves 3211 are arranged at intervals in the second direction X. The second plate body 322 covers the first groove 3211 and the third groove 3212 to form a first flow channel 323.

The second current collector 33 includes a third plate body 331 and a fourth plate body 332 that are stacked in the first direction Z. A second groove 3311 is formed on a side, facing the fourth plate body 332, of the third plate body 331. A plurality of second grooves 3311 are provided, and the plurality of second grooves 3311 are arranged at intervals in the second direction X. The fourth plate body 332 covers the second groove 3311 to form a second flow channel 333. The second plate body 322 and the fourth plate body 332 are both flat plates.

In the first direction Z, the first flow channel 323 has a first inner surface 3231 and a second inner surface 3232 that are opposite to each other, the first inner surface 3231 is a bottom wall of the first groove 3211, and the second inner surface 3232 is a surface, forming the first flow channel 323, of the second plate body 322. The first end 312 is attached to both the first inner surface 3231 and the second inner surface 3232.

In the first direction Z, the second flow channel 333 has a third inner surface 3331 and a fourth inner surface 3332 that are opposite to each other, the third inner surface 3331 is a bottom wall of the second groove 3311, and the fourth inner surface 3332 is a surface, forming the second flow channel 333, of the fourth plate body 332. The second end 313 is attached to both the third inner surface 3331 and the fourth inner surface 3332.

14 heat exchange tubes 31 are disposed, and a 1st heat exchange tube to a 14th heat exchange tube are sequentially arranged from one side to the other side of the second direction X. In the second direction X, the first grooves 3211 and the second grooves 3311 are arranged in a staggered manner, every two heat exchange tubes 31 correspond to one first groove 3211, and first ends 312 of the 2nd heat exchange tube to the 13th heat exchange tube are mounted in the corresponding first grooves 3211. Every two heat exchange tubes 31 correspond to one second groove 3311, second ends 313 of the 1st heat exchange tube to the 14th heat exchange tube are mounted in the corresponding second grooves 3311, and first ends 312 of the 1st heat exchange tube and the 14th heat exchange tube are mounted in the third groove 3212.

The fourth plate body 332 is provided with a first medium inlet/outlet 35 and a second medium inlet/outlet 36, the first medium inlet/outlet 35 is an inlet, the second medium inlet/outlet 36 is an outlet, the first medium inlet/outlet 35 is in communication with one second groove 3311, and the second medium inlet/outlet 36 is in communication with another second groove 3311. Therefore, the heat exchange medium has two flow paths. One path is that the heat exchange medium enters and passes through the heat exchange tube 31 from the first medium inlet/outlet 35, flows to the second medium inlet/outlet 36 through the first groove 3211 and the second groove 3311 alternately, and flows out from the second medium inlet/outlet 36. The other path is that the heat exchange medium enters and passes through the 14th heat exchange tube from the first medium inlet/outlet 35, flows to the 1st heat exchange tube through the third groove 3212, flows to the second medium inlet/outlet 36 through the second groove 3311 and the first groove 3211 alternately, and flows out from the second medium inlet/outlet 36.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modification, equivalent replacement, or improvement made without departing from the spirit and principle of the present application shall fall within the protection scope of the present application.

## Claims

1. A thermal management component, **characterized by** comprising:
a heat exchange tube having a first end; and
a first current collector, wherein a first flow channel used for accommodating a heat exchange medium is formed in the first current collector, and the first flow channel has a first inner surface and a second inner surface which are oppositely arranged in a first direction; and
the first end is inserted into the first flow channel, and the first end is attached to at least one of the first inner surface and the second inner surface.

2. The thermal management component according to claim 1, wherein the heat exchange tube is a flat tube, the first end has a first outer surface and a second outer surface which are oppositely arranged in the first direction, the first direction is parallel to the thickness direction of the heat exchange tube, the first inner surface is attached to the first outer surface, and/or the second inner surface is attached to the second outer surface.

3. The thermal management component according to claim 1 or 2, wherein the first current collector comprises a first plate body and a second plate body that are stacked in the first direction, a first groove is formed on a side, facing the second plate body, of the first plate body, the second plate body covers the first groove to form the first flow channel, the first inner surface is a bottom wall of the first groove, and the second inner surface is a surface, forming the first flow channel, of the second plate body.

4. The thermal management component according to claim 3, wherein the second plate body is a flat plate.

5. The thermal management component according to claim 3 or 4, wherein the heat exchange tube further comprises a body, the first end is disposed at one end of the body, the body has a third outer surface in the first direction, the second plate body has a fourth outer surface facing away from the first plate body, and the third outer surface is coplanar with the fourth outer surface.

6. The thermal management component according to claim 5, wherein the cross-sectional area of the first end is smaller than the cross-sectional area of the body, and a step is formed between an outer peripheral surface of the first end and an outer peripheral surface of the body.

7. The thermal management component according to claim 5, wherein the heat exchange tube further comprises a first bending portion, and the first end is connected to the body through the first bending portion.

8. The thermal management component according to any one of claims 1 to 7, wherein a first sealing portion is formed between the first end and the first current collector, and the first sealing portion is disposed around the outer peripheral surface of the first end.

9. The thermal management component according to claim 8, wherein the first end is welded to the first current collector to form a first welding portion, and the first welding portion is the first sealing portion.

10. The thermal management component according to any one of claims 1 to 9, wherein the heat exchange tube has a second end opposite to the first end, and the thermal management component further comprises:
a second current collector, wherein a second flow channel is formed in the second current collector, and the second flow channel has a third inner surface and a fourth inner surface which are oppositely arranged in the first direction; and
the second end is inserted into the second flow channel, and the second end is attached to at least one of the third inner surface and the fourth inner surface.

11. The thermal management component according to claim 10, wherein the second current collector comprises a third plate body and a fourth plate body that are stacked in the first direction, a second groove is formed on a side, facing the fourth plate body, of the third plate body, the fourth plate body covers the second groove to form the second flow channel, the third inner surface is a bottom wall of the second groove, and the fourth inner surface is a surface, forming the second flow channel, of the fourth plate body.

12. The thermal management component according to claim 10 or 11, wherein a plurality of heat exchange tubes are disposed, the plurality of heat exchange tubes are arranged at intervals in a second direction, each of the heat exchange tubes extends in a third direction, and any two of the first direction, the second direction, and the third direction are perpendicular to each other.

13. The thermal management component according to claim 12, wherein *S* heat exchange tubes are disposed, and a 1st heat exchange tube to an *S*th heat exchange tube are sequentially arranged from one side to the other side of the second direction;
an *N*th heat exchange tube is in communication with an (*N*+1)th heat exchange tube through the second flow channel, and an *M*th heat exchange tube is in communication with an (*M*+1)th heat exchange tube through the first flow channel; and *N* is an odd number, *M* is an even number, *S* ≥ *N* + 1, and *S* ≥ *M* + 1.

14. The thermal management component according to claim 13, wherein the 1st heat exchange tube is in communication with the *S*th heat exchange tube through the first flow channel.

15. The thermal management component according to any one of claims 10 to 14, wherein at least one of the first current collector and the second current collector is provided with a medium inlet/outlet, and the medium inlet/outlet is in communication with the first flow channel or the second flow channel.

16. The thermal management component according to any one of claims 1 to 15, wherein the length of the first end is *L*, which satisfies 2 mm ≤ *L* ≤ 20 mm.

17. The thermal management component according to claim 16, wherein 3 mm ≤ *L* ≤ 15 mm.

18. A battery, **characterized by** comprising the thermal management component according to any one of claims 1 to 17.

19. An electric device, **characterized by** comprising the battery according to claim 18, wherein the battery is configured to supply electric energy to the electric device.
